(19) **Europäisches Patentamt / European Patent Office / Office européen des brevets**

(11) **EP 4 750 192 A1**

(12) **EUROPEAN PATENT APPLICATION**
published in accordance with Art. 153(4) EPC

(43) Date of publication:
27.05.2026 Bulletin 2026/22

(21) Application number: 24848133.5

(22) Date of filing: 25.07.2024

(51) International Patent Classification (IPC):
*H04W 72/0446* (2023.01)    *H04W 72/50* (2023.01)
*H04W 24/02* (2009.01)

(52) Cooperative Patent Classification (CPC):
H04W 24/02; H04W 72/0446; H04W 72/50

(86) International application number:
PCT/CN2024/107499

(87) International publication number:
WO 2025/026176 (06.02.2025 Gazette 2025/06)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 31.07.2023  CN 202310954069

(71) Applicant: ZTE Corporation
Shenzhen, Guangdong  518057 (CN)

(72) Inventors:
• GUO, Xiaojiang
  Shenzhen, Guangdong 518057 (CN)
• LI, Ping
  Shenzhen, Guangdong 518057 (CN)

(74) Representative: Ziebig Hengelhaupt Intellectual
Property Attorneys
Patentanwaltskanzlei PartGmbB
Leipziger Straße 49
10117 Berlin (DE)

(54) **SIGNAL SENDING METHOD, SIGNAL RECEIVING METHOD, COMMUNICATION DEVICE, AND STORAGE MEDIUM**

(57)    The present disclosure provides a signal sending method, a signal receiving method, a communication device, and a storage medium. The method comprises: generating an integrated sensing and communication signal, wherein time domain resources of the integrated sensing and communication signal sequentially include a first time domain resource, a second time domain resource, and a third time domain resource; and transmitting the integrated sensing and communication signal on the second time domain resource.

```
┌─────────────────────────────────────┐
│  A sending end generates an integrated │ ── S201
│   sensing and communication signal     │
└─────────────────────────────────────┘
                   │
                   ▼
┌─────────────────────────────────────┐
│  The sending end sends the integrated  │ ── S202
│  sensing and communication signal on a │
│    second time domain resource         │
└─────────────────────────────────────┘
```

FIG. 2

**Description**

The present disclosure claims priority to Chinese Patent Application No. 202310954069.7, filed on July 31, 2023, which is hereby incorporated by reference in its entirety.

TECHNICAL FIELD

The present disclosure relates to the field of wireless communication technologies, and in particular, to a signal transmission method, a signal reception method, a communication device and a storage medium.

BACKGROUND

Currently, the 5th-generation mobile communication technology (5G) signal uses an orthogonal frequency division multiplexing (OFDM) waveform for perception.

SUMMARY

In an aspect, a signal transmission method is provided and applied to a transmitting end. The signal transmission method includes: generating an integrated sensing and communication signal, where time domain resources of the integrated sensing and communication signal include a first time domain resource, a second time domain resource and a third time domain resource in sequence; and transmitting the integrated sensing and communication signal on the second time domain resource.

In another aspect, a signal reception method is provided and applied to a receiving end. The signal reception method includes: receiving, within a preset time window, an integrated sensing and communication signal transmitted by a transmitting end on a second time domain resource, where time domain resources of the integrated sensing and communication signal include a first time domain resource, the second time domain resource and a third time domain resource in sequence; and obtaining sensing information or communication information based on the integrated sensing and communication signal received.

In yet another aspect, a signal transmission device is provided and applied to a transmitting end. The signal transmission device includes: a generating module configured to generate an integrated sensing and communication signal, where time domain resources of the integrated sensing and communication signal include a first time domain resource, a second time domain resource and a third time domain resource in sequence; and a transmitting module configured to transmit the integrated sensing and communication signal on the second time domain resource.

In yet another aspect, a signal reception device is provided and applied to a receiving end. The signal reception device includes: a receiving module configured to receive, within a preset time window, an integrated sensing and communication signal transmitted by a transmitting end on a second time domain resource, where time domain resources of the integrated sensing and communication signal include a first time domain resource, the second time domain resource and a third time domain resource in sequence; and a determining module configured to obtain sensing information or communication information based on the integrated sensing and communication signal received.

In yet another aspect, a communication device is provided. The communication device includes: a memory and a processor, where the memory is coupled to the processor; the memory is configured to store a computer program; and the processor, when executing the computer program, implements the signal transmission method or the signal reception method above.

In yet another aspect, a computer-readable storage medium is provided. The computer-readable storage medium has computer program instructions stored thereon, and the computer program instructions, when being executed by a processor, implement the signal transmission method or the signal reception method as described above.

In yet another aspect, a computer program product is provided. The computer program product includes computer program instructions, and the computer program instructions, when being executed by a processor, implement the signal transmission method or the signal reception method as described above.

BRIEF DESCRIPTION OF THE DRAWINGS

In order to describe technical solutions in the present disclosure more clearly, the accompanying drawings to be used in some embodiments of the present disclosure will be introduced briefly. Obvious, the accompanying drawings to be described below are merely drawings of some embodiments of the present disclosure, and a person of ordinary skill in the art may obtain other drawings according to these drawings.

FIG. 1 is an architecture schematic diagram of an integrated sensing and communication system, in accordance with some embodiments of the present disclosure.

FIG. 2 is a flowchart of a signal transmission method, in accordance with some embodiments of the present disclosure.

FIG. 3 is a schematic diagram of time domains of an integrated sensing and communication signal, in accordance with some embodiments of the present disclosure.

FIG. 4 is a schematic diagram of frequency domains of an integrated sensing and communication signal, in accordance with some embodiments of the present disclosure.

FIG. 5 is a flowchart of a signal reception method, in accordance with some embodiments of the present disclosure.

FIG. 6 is a schematic diagram of time domains of another integrated sensing and communication signal, in accordance with some embodiments of the present disclosure.

FIG. 7 is a flowchart of a signal transmission method and signal reception method, in accordance with some embodiments of the present disclosure.

FIG. 8 is a schematic diagram of a scenario, in accordance with some embodiments of the present disclosure.

FIG. 9 is a flowchart of another signal transmission method and signal reception method, in accordance with some embodiments of the present disclosure.

FIG. 10 is a schematic diagram of another scenario, in accordance with some embodiments of the present disclosure.

FIG. 11 is a flowchart of another signal transmission method and signal reception method, in accordance with some embodiments of the present disclosure.

FIG. 12 is a schematic diagram of another scenario, in accordance with some embodiments of the present disclosure.

FIG. 13 is a flowchart of another signal transmission method and signal reception method, in accordance with some embodiments of the present disclosure.

FIG. 14 is a schematic diagram of time domains of another integrated sensing and communication signal, in accordance with some embodiments of the present disclosure.

FIG. 15 is a schematic diagram of another scenario, in accordance with some embodiments of the present disclosure.

FIG. 16 is a flowchart of another signal transmission method and signal reception method, in accordance with some embodiments of the present disclosure.

FIG. 17 is a structural schematic diagram of a signal transmission device, in accordance with some embodiments of the present disclosure.

FIG. 18 is a structural schematic diagram of a signal reception device, in accordance with some embodiments of the present disclosure.

FIG. 19 is a structural schematic diagram of a communication device, in accordance with some embodiments of the present disclosure.

DETAILED DESCRIPTION

Technical solutions in the present disclosure will be described clearly and completely with reference to the accompanying drawings in the present disclosure below. Obviously, the described embodiments are merely some but not all embodiments of the present disclosure. All other embodiments obtained by a person of ordinary skill in the art without making inventive efforts based on the embodiments of the present disclosure shall be included in the protection scope of the present disclosure.

It should be noted that in the present disclosure, wordings such as "exemplarily" or "for example" and variations thereof are used to indicate examples, instances or illustrations. Any embodiment or design solution described in the present disclosure as "exemplarily" or "for example" should not be illustrated as being more preferred or advantageous over other embodiments or design solutions. Specifically, the usage of the wordings such as "exemplarily" or "for example" is intended to present related concepts in a concrete way.

Hereinafter, the terms such as "first" and "second" are used for descriptive purposes only, but cannot to be construed as indicating or implying relative importance or implicitly indicating the number of indicated technical features. Thus, features defined with "first" or "second" may explicitly or implicitly include one or more of the features.

In the description of the present disclosure, unless otherwise specified, a symbol "/" means "or", and for example, A/B may represent A or B. Herein, "and/or" is only used to describe an associated relationship between associated objects, which represents that there may be three relationships, and for example, A and/or B may represent three cases: only A, only B, and both A and B. In addition, "at least one" means one or more, and "multiple/a plurality of" means two or more.

Currently, when the 5th-generation mobile communication technology (5G) signal uses an orthogonal frequency division multiplexing (OFDM) waveform for perception, there are two difficulties as follows. First, the maximum sensing distance is limited when using the OFDM waveform for perception due to a length limitation of a cyclic prefix (CP) of an OFDM signal. For example, a length of a CP corresponding to 5G high-frequency 120 KHz subcarrier spacing only supports a maximum sensing distance of 87.8m. Second, communication sensing in a single-site self-transmitting and self-receiving mode has an extremely high requirement for hardware isolation, resulting in a great engineering implementation difficulty.

To address the above technical problems, embodiments of the present disclosure provide a signal transmission method, an idea of which lies in that: a transmitting end generates an integrated sensing and communication signal, where time domain resources of the integrated sensing and communication signal sequentially include a first time domain resource, a second time domain resource and a third time domain resource; the transmitting end transmits the integrated sensing and communication signal on the second time domain resource; and accordingly, a receiving end receives, within a preset time window, the integrated sensing and communication signal transmitted by the transmitting end on the second time domain resource, and obtains sensing information or communication information based on the integrated sensing and communication signal received. It can be seen that the transmitting end has a blank space before transmitting the integrated sensing and communication signal and a blank space after transmitting the integrated sensing and communication signal. Thus, the embodiments of the present disclosure may flexibly configure a length of the first time domain resource to make a waveform of the integrated sensing and communication signal more suitable for traditional communication processing operations (e.g., since a traditional OFDM waveform (original OFDM waveform) includes a cyclic prefix, the length of the first time domain resource may be set to a length of a cyclic prefix of an OFDM symbol, so as to be more suitable for traditional communication processing operations. Moreover, the embodiments of the present disclosure may flexibly configure a length of the third time domain resource to increase the maximum sensing distance (since the third time domain resource is used to receive an echo signal of the integrated sensing and communication signal, the longer the length of the third time domain resource, the farther the sensing distance). The receiving end may receive, within the preset time window, the integrated sensing and communication signal transmitted by the transmitting end on the second time domain resource to enable time-division of transmitting and receiving, thereby avoiding the isolation requirements between the receiving end and the transmitting end. Furthermore, the receiving end may obtain the sensing information or the communication information based on the integrated sensing and communication signal received, so as to realize communication and sensing functions simultaneously, thereby reducing sensing resource overhead and improving spectrum efficiency.

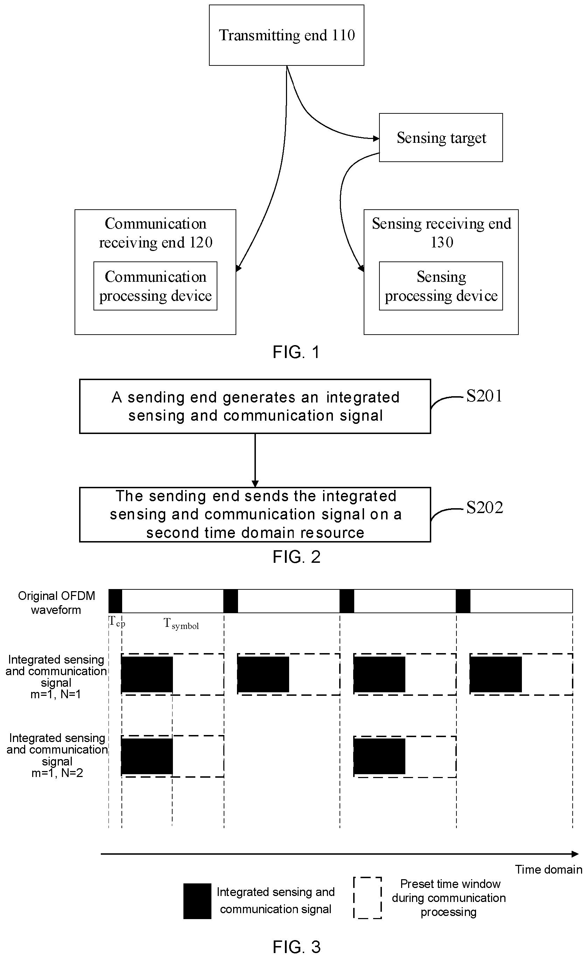

FIG. 1 is an architecture schematic diagram of an integrated sensing and communication system in accordance with the embodiments of the present disclosure. As shown in FIG. 1, the integrated sensing and communication system includes: a transmitting end 110, a communication receiving end 120 and a sensing receiving end 130.

The transmitting end 110 is used to transmit an integrated sensing and communication signal.

In some embodiments, the transmitting end 110 is used to modulate communication information on the integrated sensing and communication signal based on configuration requirements, and then transmit the integrated sensing and communication signal.

For example, the transmitting end 110 may transmit the integrated sensing and communication signal via a wireless air interface.

For example, the transmitting end 110 may be a base station or a terminal device. For example, the terminal device may be a mobile phone, a tablet computer, a desktop/laptop computer, a handheld computer, a notebook computer, an ultra-mobile personal computer (UMPC), a netbook, a cellular phone, a personal digital assistant (PDA), an augmented reality (AR) device, or a virtual reality (VR) device. The form of the terminal device is not specially limited in the embodiments of the present disclosure.

The communication receiving end 120 is used to receive the integrated sensing and communication signal and obtain the communication information based on the integrated sensing and communication signal.

In some embodiments, the communication receiving end 120 includes a communication processing device, and the communication processing device is used to perform communication processing on the integrated sensing and communication signal received to obtain the communication information.

In some embodiments, the communication receiving end 120 includes a receiving antenna, and the communication receiving end 120 may receive the integrated sensing and communication signal via the receiving antenna.

For example, the communication receiving end 120 may receive the integrated sensing and communication signal via the wireless air interface.

For example, the communication receiving end 120 may be a base station or a terminal device.

The sensing receiving end 130 is used to receive an integrated sensing and communication signal scattered by a sensing target, and to obtain sensing information based on the integrated sensing and communication signal.

In some embodiments, the sensing receiving end 130 includes a sensing processing device, and the sensing processing device is used to perform sensing processing on the integrated sensing and communication signal received to obtain the sensing information.

For example, the sensing receiving end 130 may receive the integrated sensing and communication signal via the wireless air interface.

For example, the sensing receiving end 130 may be a base station or a terminal device.

It should be noted that in the embodiments of the present disclosure, the communication receiving end 120 and the sensing receiving end 130 may be integrated in the same device; alternatively, the communication receiving end 120 and the sensing receiving end 130 may be deployed in different devices.

It should be noted that the system architecture and application scenarios described in the embodiments of the present disclosure are intended to more clearly illustrate the technical solutions in the embodiments of the present disclosure and do not constitute a limitation on the technical solutions provided in the embodiments of the present disclosure. It can be seen by those skilled in the art that with evolution of the system architecture and emergence of new business scenarios, the technical solutions provided in the embodiments of the present disclosure are also applicable to similar technical problems.

The signal transmission method provided in the embodiments of the present disclosure will be described below.

As shown in FIG. 2, the signal transmission method provided in the embodiments of the present disclosure is applied to the transmitting end 110 as shown in FIG. 1. The signal transmission method may include the following S201 and S202.

In S201, a transmitting end generates an integrated sensing and communication signal.

In some embodiments, the integrated sensing and communication signal may be a pulse signal. For example, the integrated sensing and communication signal may be a traditional radar signal, a linear frequency modulation signal, a phase-coded signal, a stepped-frequency signal, or a stepped-frequency linear frequency modulation signal.

In some embodiments, time domain resources of the integrated sensing and communication signal occupy N OFDM symbols, where N is a positive integer. For example, N is a positive integer greater than or equal to 1 and less than or equal to 14.

In some embodiments, the time domain resources of the integrated sensing and communication signal sequentially include a first time domain resource, a second time domain resource and a third time domain resource. It should be noted that the time domain resources of the integrated sensing and communication signal occupying N OFDM symbols refer to a fact that the first time domain resource, the second time domain resource and the third time domain resource of the integrated sensing and communication signal occupy a total of N OFDM symbols. For example, assuming that the time domain resources of the integrated sensing and communication signal occupy 10 OFDM symbols, the first time domain resource and the second time domain resource may occupy the 1st OFDM symbol in the 10 OFDM symbols, and the third time domain resource may occupy the remaining 9 OFDM symbols in the 10 OFDM symbols.

In some embodiments, the transmitting end does not transmit the integrated sensing and communication signal in either the first time domain resource or the third time domain resource. The representation of the waveform of the integrated sensing and communication signal is as follows: waves of the integrated sensing and communication signal in the first time domain resource and the third time domain resource are both blank.

In some embodiments, in a self-transmitting and self-receiving single-site sensing scenario, the first time domain resource may be used for beam switching and other operations, the second time domain resource may be used for transmitting the integrated sensing and communication signal, and the third time domain resource may be used for receiving a sensing echo signal. Thus, the transmitting end and the receiving end of the single site may operate in a time-division manner, thereby effectively avoiding signal leakage from the transmitting end to the receiving end, and circumventing the isolation requirements of single-site sensing.

In some embodiments, the first time domain resource and the second time domain resource are both located within the first OFDM symbol in the N OFDM symbols.

In some embodiments, S201 may be implemented as that: the transmitting end generates the integrated sensing and communication signal based on preset configuration parameters.

The preset configuration parameters include at least one of the following: a first parameter, which is configured to indicate the number of OFDM symbols occupied by the integrated sensing and communication signal; a second parameter, which is configured to determine a length of the second time domain resource of the integrated sensing and communication signal or subcarrier spacing of the integrated sensing and communication signal; or a third parameter, which is configured to determine a length of the first time domain resource.

In some embodiments, the preset configuration parameters may further include location scheduling of the time domain resources of the integrated sensing and communication signal (e.g., the location scheduling of the time domain resources of the integrated sensing and communication signal may reuse scheduling signaling of the physical downlink shared channel (PDSCH)), and other necessary parameters required for generating the integrated sensing and communication signal.

In an implementation, the first parameter (i.e., the number of the OFDM symbols occupied by the integrated sensing and communication signal) may be determined based on a preset sensing distance. The sensing distance is a distance between the transmitting end and the sensing target.

For example, the number of the OFDM symbols occupied by the integrated sensing and communication signal and the sensing distance may satisfy a monotonic increasing relationship. That is, the greater the sensing distance, the greater the number of the OFDM symbols occupied by the integrated sensing and communication signal. In this way, users may reasonably configure the number of the OFDM symbols occupied by the integrated sensing and communication signal to be suitable for different sensing distances. For example, in a case where the integrated sensing and communication signal occupies one OFDM symbol, it may be suitable for a scenario where the sensing target is relatively close, such as an indoor sensing scenario and a smart living sensing scenario; and in a case where the integrated sensing and communication signal occupies a plurality of OFDM symbols, it may be suitable for a scenario where the sensing target is relatively far away, such as a smart low-altitude scenario (a drone and the like) and a smart transportation scenario (a pedestrian, a vehicle, railway sides detection and the like).

In an implementation, a valid duration of the integrated sensing and communication signal (i.e., the second time domain resource mentioned above) is $\frac{1}{2^m}$ times a duration of an OFDM symbol, where m is a value of the second parameter, m is a positive integer, and m may take a value of 0, 1, 2, 3 or 4. For example, assuming the duration of the OFDM symbol is $T_{symbol}$, the valid duration of the integrated sensing and communication signal is $\frac{1}{2^m} \times T_{symbol}$.

It can be understood that in actual use, users may configure the value of m to adjust the length of the second time domain resource. For example, the smaller the value of m (e.g., m is 0 or 1), the larger the length of the second time domain resource, and thus the shorter the time left for sensing reception (e.g., the third time domain resource), which is more suitable for close-range sensing; and the larger the value of m (e.g., m is 2, 3 or 4), the smaller the length of the second time domain resource, and thus the longer the time left for sensing reception (e.g., the third time domain resource), which is more suitable for long-distance sensing.

In an implementation, the subcarrier spacing of the integrated sensing and communication signal is $2^m$ times subcarrier spacing of an OFDM symbol, where m is the value of the second parameter, and m is a positive integer. For example, assuming the subcarrier spacing of the OFDM symbol is $\Delta f$, the subcarrier spacing of the integrated sensing and communication signal is $2^m \times \Delta f$. Thus, during communication processing, if the receiving window is consistent with the OFDM signal, valid subcarriers are equivalent to a $2^m$-spaced comb pattern, with every $2^m$ subcarriers being orthogonal and the remaining subcarriers being sidelobes of the valid subcarriers. The communication receiving end takes only one valid orthogonal subcarrier out of every $2^m$ subcarriers for equalization and decoding.

In an implementation, a value of the third parameter may be a length of a CP of the OFDM symbol; alternatively, a value of the third parameter may be one of other values set by the users depending on actual usage. In this way, the length of the first time domain resource may be the length of the CP of the OFDM symbol; alternatively, the first time domain resource may be set to one of other values depending on actual usage.

For example, considering an example where the value of the first time domain resource is the length of the CP of the OFDM symbol, values of the first time domain resource and the third time domain resource may satisfy the following formula (1):

$$T_{front}+T_{back}=(N-2^{-m})\times T_{symbol}+NT_{cp} \qquad \text{Formula (1)}$$

Here, $T_{front}$ represents the first time domain resource, $T_{back}$ represents the third time domain resource, N is the first parameter which represents the number of the OFDM symbols occupied by the integrated sensing and communication signal, m is the second parameter, and $T_{cp}$ represents the length of the CP of the OFDM symbol.

A duty cycle corresponding to an integrated sensing and communication valid signal satisfies the following formula (2):

$$2^{-m}\times T_{symbol}/[N(T_{cp}+T_{symbol})] \qquad \text{Formula (2)}$$

In summary, a complete integrated sensing and communication signal may be represented in the time domain as the following formula (3):

$$s_{tx}(k_t)=\begin{cases} 0 & 0\le k_t < \dfrac{T_{front}}{F_s} \\ IFFT\left(s_{com}(k_f)\right) & \dfrac{T_{front}}{F_s}\le k_t < \dfrac{T_{front}+2^{-m}T_{symbol}}{F_s} \\ 0 & \dfrac{T_{front}+2^{-m}T_{symbol}}{F_s}\le k_t < \dfrac{N_{symbol}\left(T_{cp}+T_{symbol}\right)}{F_s} \end{cases} \qquad \text{Formula (3)}$$

Here, $s_{tx}(k_t)$ represents a time-domain integrated sensing and communication signal, $k_t$ represents a time-domain sampling index, $s_{com}(kf)$ represents a frequency-domain integrated sensing and communication signal (also referred to as a frequency-domain integrated sensing and communication sequence), $k_f$ represents a frequency-domain valid subcarrier index, IFFT represents inverse fast fourier transform, Fs represents a sampling frequency, and $N_{symbol}$ represents the total number of OFDM symbols included in the time domain resources of the integrated sensing and communication signal.

It can be seen that characteristics of the integrated sensing and communication signal in the time domain are as follows: no signal is transmitted on the first time domain resource $T_{front}$ (a value of $T_{front}$ may be $T_{cp}$); the integrated sensing and communication signal is transmitted on the second time domain resource $2^{-m}T_{symbol}$; and no signal is transmitted on the third time domain resource $T_{back}$.

For example, FIG. 3 is a schematic diagram of time domains of an integrated sensing and communication signal provided in accordance with the embodiments of the present disclosure. It can be seen that in a case of m=1 and N=1, the number of the OFDM symbols occupied by the integrated sensing and communication signal is 1, and the valid duration of the integrated sensing and communication signal is half the duration of the OFDM symbol (i.e., $T_{symbol}/2$); and in a case of m=1 and N=2, the number of the OFDM symbols occupied by the integrated sensing and communication signal is 2, and the valid duration of the integrated sensing and communication signal is half the duration of the OFDM symbol (i.e., $T_{symbol}/2$).

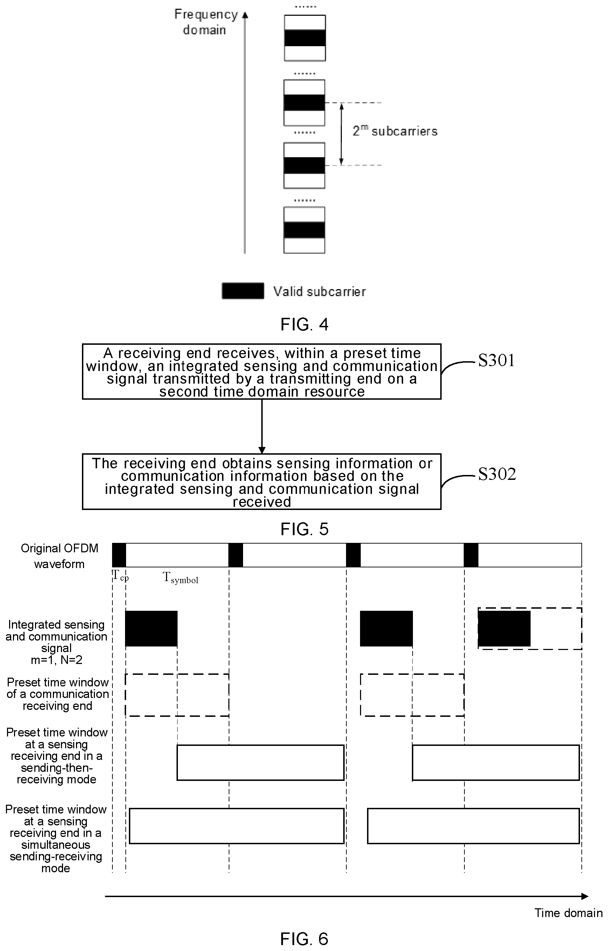

For example, FIG. 4 is a schematic diagram of frequency domains of an integrated sensing and communication signal provided in accordance with the embodiments of the present disclosure. It can be seen that since the valid subcarrier spacing in the embodiments of the present disclosure is set to $2^m \times \Delta f$, there will be a valid subcarrier (i.e., orthogonal subcarrier) every $2^m$ subcarriers in the frequency domain. Thus, when the communication receiving end performs communication processing, a valid orthogonal subcarrier may be selected every $2^m$ subcarriers from the received subcarrier sequence for equalization and decoding.

In some embodiments, the above signal transmission method further includes: the transmitting end transmits the preset configuration parameters to the receiving end. In this way, the receiving end may configure and demodulate the integrated sensing and communication signal based on the preset configuration parameters.

In some embodiments, S201 may be implemented as the following a1 to a4.

In a1, the transmitting end obtains communication information to be transmitted.

In a2, the transmitting end modulates and encodes the communication information to obtain modulation symbols.

For example, the transmitting end may modulate and encode the communication information using quadrature phase shift keying (QPSK), quadrature amplitude modulation (QAM) with 16 symbols (i.e., 16QAM), or 64QAM. The QPSK requires 2 bits of data to encode 4 different modulation symbols; 16QAM requires 4 bits of binary signal to encode 16 different modulation symbols; and 64QAM requires 6 bits of binary signal to encode 64 different modulation symbols.

It can be understood that the transmitting end may select different modulation methods based on different channel environments. For example, if the current channel environment has a relatively high signal-to-noise ratio, the 64QAM mode may be selected to increase a system throughput; and if the current channel environment has a relatively high noise power, the QPSK mode may be selected to reduce the system throughput.

In step a3, the transmitting end performs resource mapping on the modulation symbols to obtain a frequency domain subcarrier sequence.

For example, the above resource mapping method may be layer mapping. That is, the transmitting end may perform layer mapping on the modulation symbols to obtain the frequency domain subcarrier sequence.

The layer mapping is a process of mapping the modulation symbols to different transport layers (new data streams). The transport layer is a transport channel, and the number of the transport layers indicates the number of transport channels used simultaneously. For example, the number of the transport layers is 2, which indicates that two transport channels transmit information simultaneously. At the same time, the information transmitted by the two transport layers may be the same or different, and no limitation is made here.

In step a4, the transmitting end performs symbol shaping processing on the frequency domain subcarrier sequence to obtain the integrated sensing and communication signal.

For example, the above symbol shaping process may be IFFT. In this way, the frequency domain subcarrier sequence may be transformed into the time domain to obtain a time-domain integrated sensing and communication signal.

In S202, the transmitting end transmits the integrated sensing and communication signal on the second time domain resource.

It can be understood that the transmitting end does not transmit signals on either the first time domain resource or the third time domain resource.

For example, the transmitting end may transmit the integrated sensing and communication signal via a wireless air interface.

It can be understood that in the signal transmission method provided in the embodiments of the present disclosure, the transmitting end generates the integrated sensing and communication signal, where the time domain resources of the integrated sensing and communication signal sequentially include the first time domain resource, the second time domain resource and the third time domain resource; and the transmitting end transmits the integrated sensing and communication signal on the second time domain resource. It can be seen that the transmitting end has a blank space before transmitting the integrated sensing and communication signal and a blank space after transmitting the integrated sensing and communication signal. Thus, the embodiments of the present disclosure may flexibly configure the length of the first time domain resource to make the waveform of the integrated sensing and communication signal more suitable for traditional communication processing operations, and flexibly configure the length of the third time domain resource to increase the maximum sensing distance.

The signal reception method provided in the embodiments of the present disclosure will be described below.

As shown in FIG. 5, the signal reception method provided in the embodiments of the present disclosure is applied to a receiving end (the receiving end may be the communication receiving end 120 or the sensing receiving end 130 as shown in FIG. 1). The signal reception method may include the following S301 and S302.

In S301, a receiving end receives, within a preset time window, an integrated sensing and communication signal transmitted by a transmitting end on a second time domain resource.

For example, in a case where the receiving end is a sensing receiving end, the sensing receiving end receives, within the preset time window, an integrated sensing and communication signal transmitted by the transmitting end on the second time domain resource and reflected by a sensing target.

In some embodiments, the signal reception method further includes: determining the preset time window based on preset configuration parameters.

In an implementation, in a case where the receiving end is a communication receiving end, a start time of the preset time window is a time at which the communication receiving end has received the integrated sensing and communication signal, or a time before the communication receiving end has received the integrated sensing and communication signal. In a case where a length of a first time domain resource is a length of a cyclic prefix, the preset time window may include other time domain resources in the first OFDM symbol except for the first time domain resource (i.e., a length of the preset time window is $T_{symbol}$).

For example, as shown in FIG. 6, in a case where the transmitting end transmits the integrated sensing and communication signal in a form of m=1 and N=2, the communication receiving end receives the integrated sensing and communication signal within the preset time window shown in FIG. 6. The start time of the preset time window is a time of $T_{front}$ (a value of $T_{front}$ may be $T_{cp}$), and the length of the preset time window is $T_{symbol}$. The preset time window includes other time domain resources in the first OFDM symbol except for the first time domain resource.

It can be understood that in a case where $T_{front}$ takes a value of $T_{cp}$, the communication receiving end starts receiving the integrated sensing and communication signal with a length of $T_{symbol}$ from the time of $T_{front}$, which is equivalent to a de-CP operation of the traditional OFDM waveform.

In another implementation, in a case where the receiving end is a sensing receiving end and a transmitting-receiving mode is a transmitting-then-receiving mode, the start time of the preset time window is an end time of the second time domain resource, and the preset time window includes the third time domain resource.

For example, as shown in FIG. 6, in a case where the transmitting end transmits the integrated sensing and communication signal in a form of m=1 and N=2, the sensing receiving end receives the integrated sensing and communication signal within the preset time window shown in FIG. 6. The start time of the preset time window may be $T_{front}+2^{-m}\times T_{symbol}$, and the length of the preset time window is $T_{back}$.

It can be understood that if the transmitting-receiving mode adopts a transmitting-then-receiving mode, transmitting and receiving of the integrated sensing and communication signal is carried out in a time-division manner, and thus the isolation requirements between the transmitting end and the receiving end may be avoided, and the sensing function may be realized without changing the relevant hardware. Of course, the transmitting-then-receiving mode may have certain blind spots in close-range perception.

In another implementation, in a case where the receiving end is a sensing receiving end and a transmitting-receiving mode is a simultaneous transmitting-receiving mode, the start time of the preset time window is an end time of the first time domain resource, and the preset time window includes both the second time domain resource and the third time domain resource.

For example, as shown in FIG. 6, in a case where the transmitting end transmits the integrated sensing and communication signal in a form of m=1 and N=2, the sensing receiving end receives the integrated sensing and communication signal within the preset time window shown in FIG. 6. The start time of the preset time window may be $T_{front}$, and the length of the preset time window is $2^{-m}\times T_{symbol}+T_{back}$.

It can be understood that if the transmitting-receiving mode adopts a simultaneous transmitting-receiving mode, there will be no blind spot in a close range. However, it needs high isolation between the receiving end and the transmitting end, and needs multi-site or single-site full-duplex technology support.

In S302, the receiving end obtains sensing information or communication information based on the integrated sensing and communication signal received.

In some embodiments, the signal reception method further includes: the receiving end receiving preset configuration parameters transmitted by the transmitting end, and demodulating the integrated sensing and communication signal based on the preset configuration parameters to obtain the sensing information or the communication information.

In some embodiments, in a case where the receiving end is a communication receiving end, the communication receiving end performs communication processing on the received integrated sensing and communication signal to obtain the communication information.

The communication processing may adopt a traditional OFDM waveform processing method. For example, the communication receiving end performs communication processing on the received integrated sensing and communication signal to obtain the communication information, which may be implemented as the following b1 to b3.

In b1, the communication receiving end performs fast fourier transformation (FFT) on the integrated sensing and communication signal to obtain frequency domain subcarrier information.

In b2, the communication receiving end obtains a valid subcarrier from the frequency domain subcarrier information.

For example, the communication receiving end obtains a valid subcarrier every $2^m$ subcarriers.

In b3, the communication receiving end performs equalization and decoding operations on valid subcarriers to obtain the communication information.

It can be seen that the parameters (e.g., a value of the first time domain resource $T_{front}$ is $T_{cp}$) of the integrated sensing and communication signal provided in the embodiment of the present disclosure may be well compatible with the processing framework of the related communication OFDM waveforms. Therefore, the integrated sensing and communication signal may be processed using the traditional OFDM waveform processing method (e.g., de-CP, FFT operation, and the like) to obtain the communication information.

In some embodiments, in a case where the receiving end is a sensing receiving end, the sensing receiving end performs sensing processing on the received integrated sensing and communication signal to obtain the sensing information.

For example, the sensing information may include a distance from the sensing target, a speed of the sensing target, an azimuth angle of the sensing target, a pitch angle of the sensing target, and other information.

For example, the sensing function of the integrated sensing and communication signal may be applied to a scenario of detecting location information of the sensing target, a scenario of reconstructing the environment based on the detected location information of the sensing target, and a scenario of detecting breathing and heartbeat.

It can be understood that in the signal reception method provided in the embodiments of the present disclosure, the receiving end may receive, within the preset time window, the integrated sensing and communication signal transmitted by the transmitting end on the second time domain resource; and the receiving end obtains the sensing information or the communication information based on the integrated sensing and communication signal received. It can be seen that the receiving end may receive, within the preset time window, the integrated sensing and communication signal transmitted by the transmitting end on the second time domain resource to enable time-division of transmitting and receiving, thereby avoiding the isolation requirements between the receiving end and the transmitting end. Furthermore, the embodiments of the present disclosure may flexibly adjust the length of the preset time window (the preset time window may include the second time domain resource and the third time domain resource, or the preset time window may include the third time domain resource) to flexibly adjust the maximum sensing distance. The receiving end obtains the sensing information or the communication information based on the integrated sensing and communication signal received, so as to realize communication and sensing functions simultaneously, thereby reducing sensing resource overhead and improving spectrum efficiency.

For example, the signal transmission method and signal reception method provided in the embodiments of the present disclosure will be described below from perspectives of the transmitting end, the communication receiving end and the sensing receiving end, respectively.

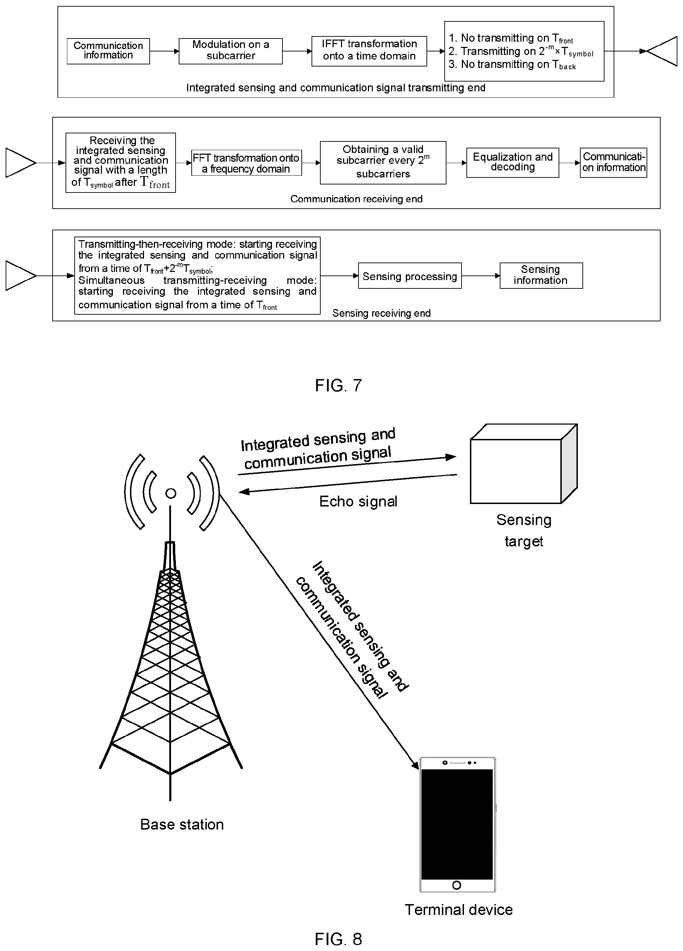

As shown in FIG. 7, after obtaining the communication information, the transmitting end modulates the communication information on a subcarrier and then performs IFFT transformation on the communication information onto a time domain to obtain the time-domain integrated sensing and communication signal. When transmitting the integrated sensing and communication signal, the transmitting end does not transmit a signal on the first time domain resource $T_{front}$, transmits the integrated sensing and communication signal on the second time domain resource $2^{-m}T_{symbol}$, and does not transmit a signal on the third time domain resource $T_{back}$.

The communication receiving end receives the integrated sensing and communication signal within a preset time window (a start time of the preset time window is $T_{front}$; and a length of the preset time window is $T_{symbol}$), and performs FFT transformation on the received integrated sensing and communication signal onto a frequency domain. Then, the communication receiving end obtains a valid subcarrier every $2^m$ subcarriers, and performs equalization and decoding operations on valid subcarriers to obtain the communication information.

In a case where the transmitting-receiving mode is a transmitting-then-receiving mode, the sensing receiving end starts receiving the integrated sensing and communication signal from a time of $T_{front}+2^{-m}T_{symbol}$. In a case where the transmitting-receiving mode is a simultaneous transmitting-receiving mode, the sensing receiving end starts receiving the integrated sensing and communication signal from a time of $T_{front}$. The sensing receiving end performs sensing processing on the received integrated sensing and communication signal to obtain the sensing information.

For ease of understanding, the signal transmission method and signal reception method provided in the embodiments of the present disclosure will be described below by considering examples of different application scenarios.

Scenario 1: a self-transmitting and self-receiving scenario of a base station (a transmitting end is the base station, a sensing receiving end is the base station, and a communication receiving end is a terminal device)

For example, as shown in FIG. 8, in Scenario 1, the base station, as the transmitting end, configures and transmits an integrated sensing and communication signal. Moreover, the base station, also as the sensing receiving end, receives the integrated sensing and communication signal reflected back by a sensing target and processes the integrated sensing and communication signal to obtain sensing information. The terminal device, as the communication receiving end, receives the integrated sensing and communication signal transmitted by the base station and processes the integrated sensing and communication signal to obtain communication information.

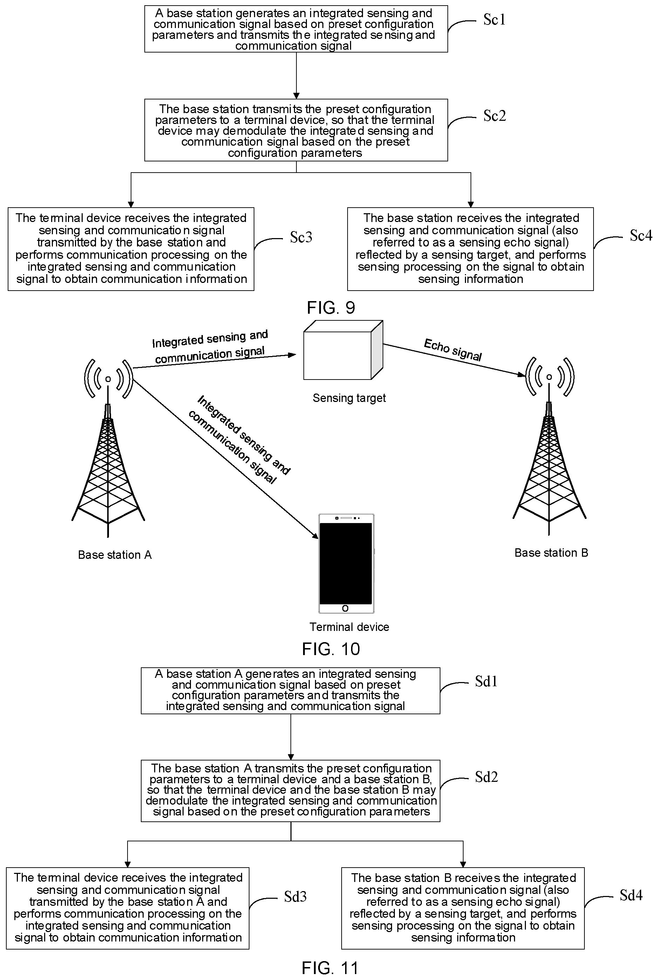

For example, as shown in FIG. 9, the signal transmission method and signal reception method provided in the embodiments of the present disclosure may be implemented as the following Sc1 to Sc4.

In Sc1, the base station generates the integrated sensing and communication signal based on preset configuration parameters and transmits the integrated sensing and communication signal.

The preset configuration parameters include a first parameter N (used to characterize the number of OFDM symbols occupied by the integrated sensing and communication signal), a second parameter m (used to determine a length of the second time domain resource of the integrated sensing and communication signal or subcarrier spacing of the integrated sensing and communication signal) and a third parameter $T_{front}$ (used to determine a length of the first time domain resource).

In some embodiments, the preset configuration parameters may further include locations of the time domain resources of the integrated sensing and communication signal, a sequence generation method of the integrated sensing and communication signal, and the like.

For example, assuming N=2, m=1, $\Delta f$=120 KHz, and $T_{front}$ is set to $T_{cp}$, the schematic diagram of the integrated sensing and communication signal on the time domain may be in a form shown in FIG. 6. The integrated sensing and communication signal carries communication information, and the location scheduling of the time domain resources of the integrated sensing and communication signal may reuse scheduling signaling of the PDSCH.

For example, as shown in FIG. 6, a difference between the integrated sensing and communication signal generated by the base station based on the preset configuration parameters and the traditional OFDM waveform lies in that: there is no signal transmitted in the empty $T_{cp}$ length at the beginning of the integrated sensing and communication signal, a waveform length of the integrated sensing and communication signal is only 1/2 of the traditional OFDM waveform length (in a case of m taking a value of 1), and a waveform of one integrated sensing and communication signal occupies two traditional OFDM waveforms (in a case of N taking a value of 2).

In some embodiments, after transmitting the integrated sensing and communication signal with a valid length of $T_{symbol}/2$, the base station switches a transmitting channel to a receiving channel.

In Sc2, the base station transmits preset configuration parameters to the terminal device, so that the terminal device may demodulate the integrated sensing and communication signal based on the preset configuration parameters.

In Sc3, the terminal device receives the integrated sensing and communication signal transmitted by the base station and performs communication processing on the integrated sensing and communication signal to obtain communication information.

It can be understood that since the parameters of the integrated sensing and communication signal designed in the embodiment of the present disclosure may be well compatible with the processing framework of the traditional OFDM waveforms, the terminal device may perform communication processing on the integrated sensing and communication signal using the traditional OFDM waveform processing method to obtain the communication information.

It should be noted that although each integrated sensing and communication signal may occupy N OFDM symbols, a valid duration of each integrated sensing and communication signal is $1/2^m$ times a duration of an OFDM symbol (i.e., the valid duration of the integrated sensing and communication signal is less than or equal to the duration of the OFDM symbol). Therefore, the terminal device only needs to receive and process a signal corresponding to a time window of the first OFDM symbol.

In Sc4, the base station receives the integrated sensing and communication signal (also referred to as a sensing echo signal) reflected by the sensing target, and performs sensing processing on the signal to obtain sensing information.

It can be understood that the base station in Scenario 1 operates in a self-transmitting and self-receiving mode. Therefore, in order to avoid the isolation requirements of a single base station in a self-transmitting and self-receiving scenario, the base station may adopt a transmitting-then-receiving mode.

For example, the base station may start receiving the sensing echo signal from a time of $T_{cp}+T_{symbol}/2$, and perform sensing processing based on the preset configuration parameters to obtain a distance from the sensing target, a speed of the sensing target, an azimuth angle of the sensing target, a pitch angle of the sensing target, and other information.

Scenario 2: a scenario of a base station A for transmitting and a base station B for receiving (a transmitting end is the base station A, a sensing receiving end is the base station B, and a communication receiving end is a terminal device)

For example, as shown in FIG. 10, in Scenario 2, the base station A, as the transmitting end, configures and transmits an integrated sensing and communication signal; the base station B, as the sensing receiving end, receives the integrated sensing and communication signal reflected back by a sensing target and processes the integrated sensing and communication signal to obtain sensing information; and the terminal device, as the communication receiving end, receives the integrated sensing and communication signal transmitted by the base station A and processes the integrated sensing and communication signal to obtain communication information.

For example, as shown in FIG. 11, the signal transmission method and signal reception method provided in the embodiments of the present disclosure may be implemented as the following Sd1 to Sd4.

In Sd1, the base station A generates the integrated sensing and communication signal based on preset configuration parameters and transmits the integrated sensing and communication signal.

For example, the implementation of the Sd1 may refer to the Sc1 above, and details are not repeated here.

In Sd2, the base station A transmits preset configuration parameters to the terminal device and the base station B, so that the terminal device and the base station B may demodulate the integrated sensing and communication signal based on the preset configuration parameters.

In Sd3, the terminal device receives the integrated sensing and communication signal transmitted by the base station A and performs communication processing on the integrated sensing and communication signal to obtain communication information.

For example, the implementation of the Sd3 may refer to the Sc3 above, and details are not repeated here.

In Sd4, the base station B receives the integrated sensing and communication signal (also referred to as a sensing echo signal) reflected by the sensing target, and performs sensing processing on the signal to obtain sensing information.

It can be understood that in Scenario 2, the base station A transmits the integrated sensing and communication signal, the base station B receives the sensing echo signal, and thus there is no isolation problem. Therefore, the base station B may adopt a simultaneous transmitting-receiving working mode.

For example, the base station B may start receiving the sensing echo signal from a time of $T_{cp}$, and perform sensing processing based on the preset configuration parameters to obtain a distance from the sensing target, a speed of the sensing target, an azimuth angle of the sensing target, a pitch angle of the sensing target, and other information.

Scenario 3: a scenario of a terminal device for transmitting and a base station for receiving (a transmitting end is the terminal device, a sensing receiving end is the base station, and a communication receiving end is the base station)

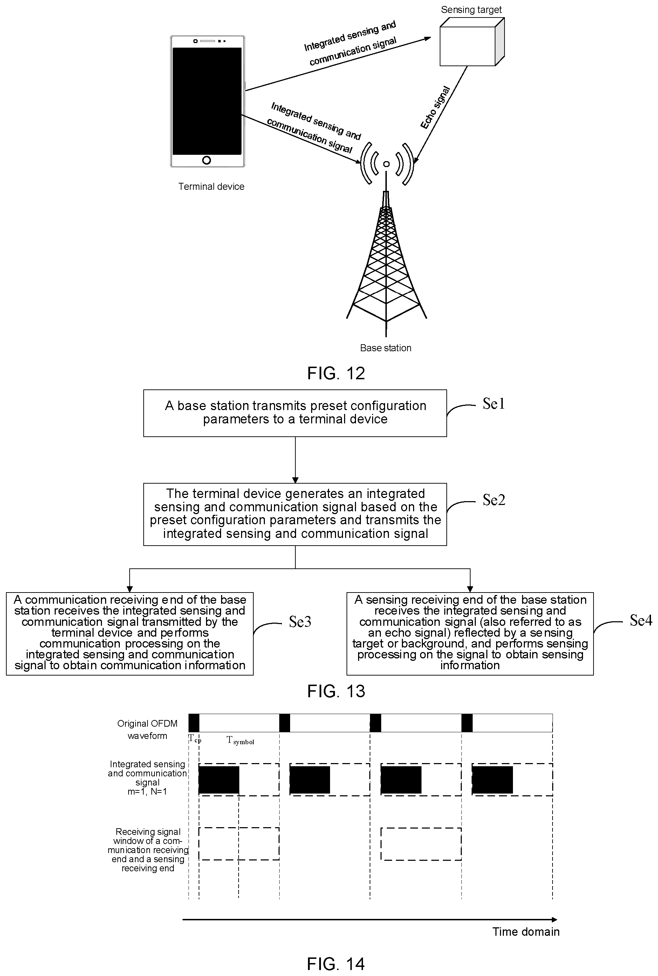

For example, as shown in FIG. 12, in scenario 3, the terminal device, as the transmitting end, configures and transmits an integrated sensing and communication signal; the sensing receiving end of the base station receives the integrated sensing and communication signal reflected back by a sensing target and processes the integrated sensing and communication signal to obtain sensing information; and the communication receiving end of the base station receives the integrated sensing and communication signal transmitted by the terminal device and processes the integrated sensing and communication signal to obtain communication information.

For example, as shown in FIG. 13, the signal transmission method and signal reception method provided in the embodiments of the present disclosure may be implemented as the following Se1 to Se4.

In Se1, the base station transmits preset configuration parameters to the terminal device.

For example, the base station may transmit the preset configuration parameters to the terminal device via signaling.

In Se2, the terminal device generates an integrated sensing and communication signal based on the preset configuration parameters and transmits the integrated sensing and communication signal.

For example, assuming N=1, m=1, Δf=120 KHz, and $T_{front}$ is set to $T_{cp}$, the schematic diagram of the integrated sensing and communication signal on the time domain may be in a form shown in FIG. 14. The integrated sensing and communication signal carries communication information, and the location scheduling of the time domain resources of the integrated sensing and communication signal may reuse scheduling signaling of the PDSCH.

For example, as shown in FIG. 14, a difference between the integrated sensing and communication signal generated by the terminal device based on the preset configuration parameters and the traditional OFDM waveform lies in that: there is no signal transmitted in the empty $T_{cp}$ length at the beginning of the integrated sensing and communication signal, a waveform length of the integrated sensing and communication signal is only 1/2 of the traditional OFDM waveform length (in a case of m taking a value of 1), and a waveform of one integrated sensing and communication signal occupies one traditional OFDM waveform (in a case of N taking a value of 1). Therefore, the terminal device controls the transmitting end not to transmit any valid signal after the first OFDM symbol based on the preset configuration parameters.

In Se3, the communication receiving end of the base station receives the integrated sensing and communication signal transmitted by the terminal device and performs communication processing on the integrated sensing and communication signal to obtain communication information.

For example, as shown in FIG. 14, in a case of N=1, each integrated sensing and communication signal occupies exactly 1 OFDM symbol. Therefore, the base station may receive the integrated sensing and communication signal based on the time window corresponding to the traditional OFDM symbol.

In Se4, the sensing receiving end of the base station receives the integrated sensing and communication signal (also referred to as an echo signal) reflected by the sensing target or background, and performs sensing processing on the signal to obtain sensing information.

In some embodiments, the sensing receiving end of the base station may reuse the integrated sensing and communication signal received by the communication receiving end, perform sensing processing on the integrated sensing and communication signal to obtain a parameter estimation result of the sensing target, and finally reconstruct the environment based on distances from different targets, azimuth angles of different targets, pitch angles of different targets, scattering intensities of targets, and other information.

Scenario 4: a self-transmitting and self-receiving scenario of a terminal device (a transmitting end is the terminal device, a sensing receiving end is the terminal device, and a communication receiving end is a base station)

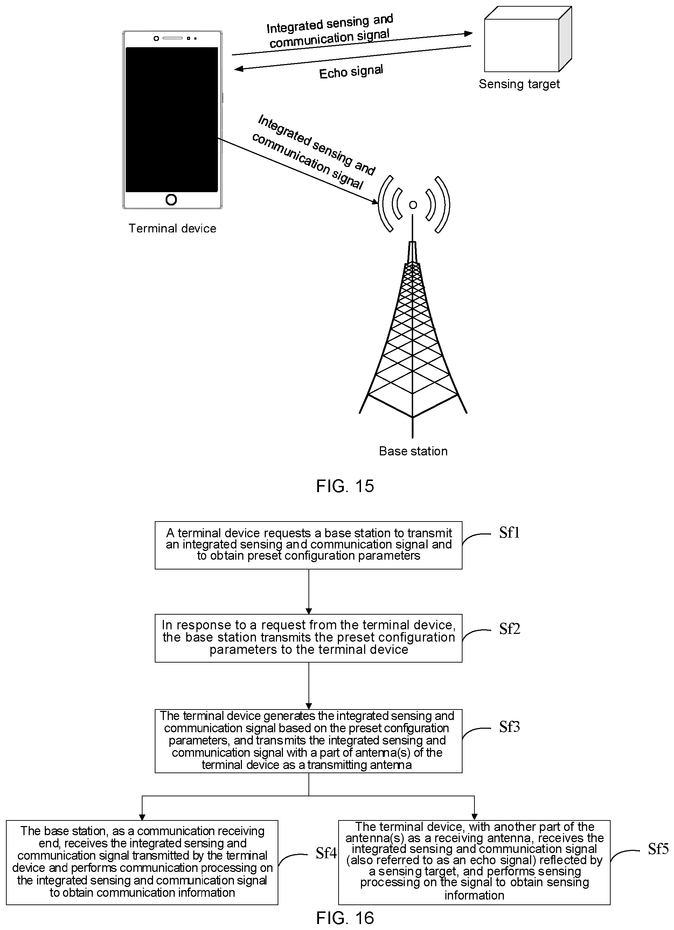

For example, as shown in FIG. 15, in Scenario 4, the terminal device, as the transmitting end, configures and transmits an integrated sensing and communication signal. Moreover, the terminal device, also as the sensing receiving end, receives the integrated sensing and communication signal reflected back by a sensing target and processes the integrated sensing and communication signal to obtain sensing information. The base station, as the communication receiving end, receives the integrated sensing and communication signal transmitted by the terminal device and processes the integrated sensing and communication signal to obtain communication information.

For example, as shown in FIG. 16, the signal transmission method and signal reception method provided in the embodiments of the present disclosure may be implemented as the following Sf1 to Sf5.

In Sf1, the terminal device requests the base station to transmit an integrated sensing and communication signal and to obtain preset configuration parameters.

In Sf2, in response to a request from the terminal device, the base station transmits the preset configuration parameters to the terminal device.

For example, the base station may transmit the preset configuration parameters to the terminal device via signaling.

In Sf3, the terminal device generates the integrated sensing and communication signal based on the preset configuration parameters, and transmits the integrated sensing and communication signal with a part of antenna(s) of the terminal device as a transmitting antenna.

For example, the implementation of the Sf3 may refer to the Se2 above, and details are not repeated here.

In Sf4, the base station, as a communication receiving end, receives the integrated sensing and communication signal transmitted by the terminal device and performs communication processing on the integrated sensing and communication signal to obtain communication information.

For example, the implementation of the Sf4 may refer to the Se3 above, and details are not repeated here.

In Sf5, the terminal device, with another part of the antenna(s) as a receiving antenna, receives the integrated sensing and communication signal (also referred to as an echo signal) reflected by the sensing target, and performs sensing processing on the signal to obtain sensing information.

For example, in a case of N=1, which is suitable for close-range sensing scenarios, the receiving antenna of the terminal device may reuse the traditional OFDM signal reception method to receive the echo signal. After performing sensing processing on the echo signal based on the preset configuration parameters, the terminal device detects rise and fall of the chest cavity, thereby obtaining breathing and heartbeat sensing information.

The solutions in the embodiments of the present disclosure are described above mainly from a perspective of methods. It may be understood that in order to achieve the above functions, a signal transmission device and a signal reception device include at least one of hardware structure(s) and software module(s) corresponding to execution of each function. It should be easily realized by those skilled in the art that in combination with units and algorithm steps of each example described in the disclosed embodiments herein, the embodiments of the present disclosure may be implemented in a form of hardware or a combination of hardware and computer software. Whether a certain function is performed by means of hardware or by means of computer software driving hardware depends on both specific application and design constraint conditions of the technical solutions. Professional technicians may use different methods for each specific application to implement the described functions, but such an implementation should not be considered beyond the scope of the embodiments of the present disclosure.

It may be understood that in order to achieve the above functions, a signal transmission device and a signal reception device include hardware structure(s) and/or software module(s) corresponding to execution of each function. It should be easily realized by those skilled in the art that in combination with algorithm steps of each example described in the embodiments of the present disclosure, the present disclosure may be implemented in a form of hardware or a combination of hardware and computer software. Whether a certain function is performed by means of hardware or by means of computer software driving hardware depends on both specific application and design constraint conditions of the technical solutions. Professional technicians may use different methods for each specific application to implement the described functions, but such an implementation should not be considered beyond the scope of the present disclosure.

In the embodiments of the present disclosure, a signal transmission device and a signal reception device may be divided into functional modules based on the above method embodiments, example, each function may correspond to a separate functional module, or two or more functions may be integrated into a single functional module. The above integrated module may be implemented in a form of hardware or may be implemented in a form of software. It should be noted that the division of modules in the embodiments of the present disclosure is illustrative and is merely a logical functional division, and there may be other division methods in actual implementations. The following will be described by considering an example where each function corresponds to a separate functional module.

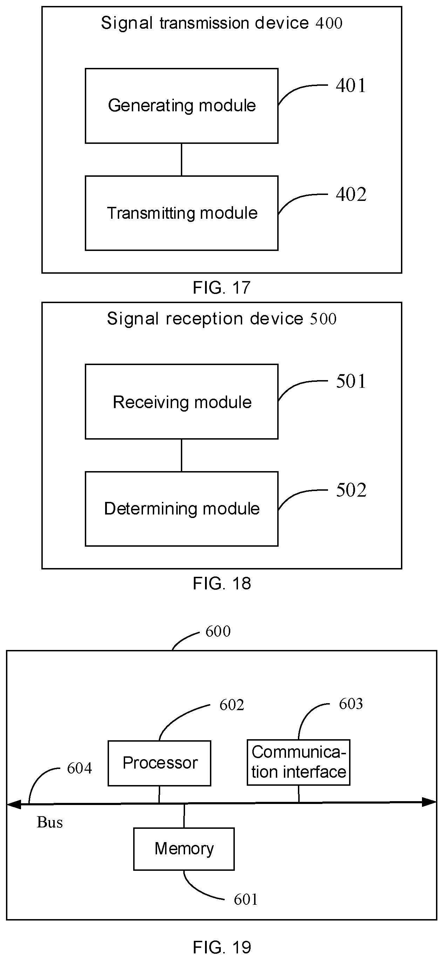

FIG. 17 is a structural schematic diagram of a signal transmission device in the embodiments of the present disclosure. The signal transmission device may perform the signal transmission method provided in the above method embodiments. As shown in FIG. 17, the signal transmission device 400 may include a generating module 401 and a transmitting module 402.

The generating module 401 is configured to generate an integrated sensing and communication signal. Time domain resources of the integrated sensing and communication signal include a first time domain resource, a second time domain resource and a third time domain resource in sequence.

The transmitting module 402 is configured to transmit the integrated sensing and communication signal on the second time domain resource.

In some embodiments, the time domain resources of the integrated sensing and communication signal include N OFDM symbols, where N is a positive integer.

In some embodiments, the generating module 401 is configured to, for example, generate the integrated sensing and communication signal based on preset configuration parameters. The preset configuration parameters include at least one of the following: a first parameter, which is configured to indicate the number of OFDM symbols occupied by the integrated sensing and communication signal; a second parameter, which is configured to determine a length of the second time domain resource of the integrated sensing and communication signal or subcarrier spacing of the integrated sensing and communication signal; or a third parameter, which is configured to determine a length of the first time domain resource.

In some embodiments, the subcarrier spacing of the integrated sensing and communication signal is $2^m$ times subcarrier spacing of an OFDM symbol, where m is the value of the second parameter, and m is a positive integer.

In some embodiments, a valid duration of the integrated sensing and communication signal is $\frac{1}{2^m}$ times a duration of an OFDM symbol, where m is a value of the second parameter, and m is a positive integer.

In some embodiments, the first time domain resource and the second time domain resource are both located within the first OFDM symbol in the N OFDM symbols.

In some embodiments, the length of the first time domain resource is a length of a cyclic prefix of the OFDM symbol.

In some embodiments, the number of the OFDM symbols occupied by the integrated sensing and communication signal is determined based on a preset sensing distance. The sensing distance is a distance between the transmitting end and the sensing target.

In some embodiments, the number of the OFDM symbols occupied by the integrated sensing and communication signal and the sensing distance may satisfy a monotonic increasing relationship.

In some embodiments, the generating module 401 is configured to, for example, obtain communication information to be transmitted; modulate and encode the communication information to obtain modulation symbols; perform resource mapping on the modulation symbols to obtain a frequency domain subcarrier sequence; and perform symbol shaping processing on the frequency domain subcarrier sequence to obtain the integrated sensing and communication signal.

In some embodiments, the integrated sensing and communication signal is a pulse signal.

FIG. 18 is a structural schematic diagram of a signal reception device in the embodiments of the present disclosure. The signal reception device may perform the signal reception method provided in the above method embodiments. As shown in FIG. 18, the signal reception device 500 may include a receiving module 501 and a determining module 502.

The receiving module 501 is configured to receive, within a preset time window, an integrated sensing and communication signal transmitted by a transmitting end on a second time domain resource, where time domain resources of the integrated sensing and communication signal include a first time domain resource, the second time domain resource and a third time domain resource in sequence.

**EP 4 750 192 A1**

The determining module 502 is configured to obtain sensing information or communication information based on the integrated sensing and communication signal received.

In some embodiments, the time domain resources of the integrated sensing and communication signal include N OFDM symbols, where N is a positive integer.

In some embodiments, the determining module 502 is further configured to determine the preset time window based on preset configuration parameters. The preset configuration parameters include at least one of the following: a first parameter, which is configured to indicate the number of OFDM symbols occupied by the integrated sensing and communication signal; a second parameter, which is configured to determine a length of the second time domain resource of the integrated sensing and communication signal or subcarrier spacing of the integrated sensing and communication signal; or a third parameter, which is configured to determine a length of the first time domain resource.

In some embodiments, the subcarrier spacing of the integrated sensing and communication signal is $2^m$ times subcarrier spacing of an OFDM symbol, where m is the value of the second parameter, and m is a positive integer.

In some embodiments, a valid duration of the integrated sensing and communication signal is $\frac{1}{2^m}$ times a duration of an OFDM symbol, where m is a value of the second parameter, and m is a positive integer.

In some embodiments, the first time domain resource and the second time domain resource are both located within the first OFDM symbol in the N OFDM symbols.

In some embodiments, the length of the first time domain resource is a length of a cyclic prefix of the OFDM symbol.

In some embodiments, in a case where the receiving end is a communication receiving end, the preset time window includes other time domain resources in the first OFDM symbol except for the first time domain resource. A start time of the preset time window is a time at which the communication receiving end has received the integrated sensing and communication signal; alternativel, a start time of the preset time window is a time before the communication receiving end has received the integrated sensing and communication signal.

In some embodiments, in a case where the receiving end is a sensing receiving end, the preset time window includes both the second time domain resource and the third time domain resource.

In some embodiments, in a case where the receiving end is a sensing receiving end, the preset time window includes the third time domain resource.

In some embodiments, the number of the OFDM symbols occupied by the integrated sensing and communication signal is determined based on a preset sensing distance. The sensing distance is a distance between the transmitting end and the sensing target.

In some embodiments, the number of the OFDM symbols occupied by the integrated sensing and communication signal and the sensing distance may satisfy a monotonic increasing relationship.

In some embodiments, the integrated sensing and communication signal is a pulse signal.

In a case where the functions of the above integrated module are implemented in a form of hardware, the embodiments of the present disclosure provide another structure of a communication device involved in the above embodiments. As shown in FIG. 19, the communication device 600 includes: a processor 602 and a bus 604. In some embodiments, the communication device 600 may further include a memory 601. In some embodiments, the communication device 600 may further include a communication interface 603.

The processor 602 may implement or perform various exemplary logical blocks, modules and circuits described in combination with the embodiments of the present disclosure. The processor 602 may be a central processor, a general-purpose processor, a digital signal processor, an application specific integrated circuit, a field programmable gate array, or other programmable logic devices, a transistor logic device, a hardware component or any combination thereof, and may implement or perform various exemplary logical blocks, modules and circuits described in combination with the embodiments of the present disclosure. The processor 602 may also be a combination that implements computing functions, for example, a combination including one or more microprocessors, a combination of a digital signal processor (DSP) and a microprocessor, or the like.

The communication interface 603 is configured to be connected with other devices via a communication network. The communication network may be an Ethernet, a wireless access network, a wireless local area network (WLAN), or the like.

The memory 601 may be a read-only memory (ROM) or any of other types of static storage devices that may store static information and instructions, a random access memory (RAM) or any of other types of dynamic storage devices that may store information and instructions, an electrically erasable programmable read-only memory (EEPROM), a magnetic disk storage medium or any of other magnetic storage devices, or any of other medium that may be used to carry or store desired program codes having a form of instructions or data structures or may be accessed by a computer, which is not limited thereto.

In a possible implementation, the memory 601 may exist independently of the processor 602, and the memory 601 may be connected to the processor 602 via the bus 604, and is used for storing instructions or program codes. The processor 602, when call and execute the instructions or program codes stored in the memory 601, may implement the signal transmission method and the signal reception method provided in the embodiments of the present disclosure.

In another possible implementation, the memory 601 and the processor 602 may be integrated together.

The bus 604 may be an extended industry standard architecture (EISA) bus or the like. The bus 604 may be classified as an address bus, a data bus, a control bus, or the like. For convenience of representation, only a thick line is shown in FIG. 19 for representation, but it does not mean that there is only one bus or one type of bus.

Some embodiments of the present disclosure provide a computer-readable storage medium (e.g., a non-transitory computer-readable storage medium). The computer-readable storage medium has computer program instructions stored thereon, and the computer program instructions, when running on a computer, enable the computer to perform the signal transmission method and the signal reception method in any of the above embodiments.

For example, the above computer-readable storage medium may include, but is not limited to: a magnetic storage device (e.g., a hard disk, a floppy disk, or a magnetic tape), an optical disk (e.g., a compact disk (CD)), a digital versatile disk (DVD), a smart card and a flash device (e.g., an erasable programmable read-only memory (EPROM), a card, a stick or a key drive). The various computer-readable storage media described in the present disclosure may represent one or more devices and/or other machine-readable storage media for storing information. The term "machine-readable storage medium" may include, but is not limited to, a wireless channel and various other media capable of storing, containing and/or carrying instructions and/or data.

The embodiments of the present disclosure provide a computer program product including instructions. The computer program product, when running on a computer, enables the computer to perform the signal transmission method and the signal reception method in any of the above embodiments.

In the signal transmitting scheme provided in the embodiments of the present disclosure, the transmitting end generates the integrated sensing and communication signal, where the time domain resources of the integrated sensing and communication signal sequentially include the first time domain resource, the second time domain resource and the third time domain resource; and the transmitting end transmits the integrated sensing and communication signal on the second time domain resource. It can be seen that the transmitting end has a blank space before transmitting the integrated sensing and communication signal and a blank space after transmitting the integrated sensing and communication signal. Thus, the embodiments of the present disclosure may flexibly configure the length of the first time domain resource to make the waveform of the integrated sensing and communication signal more suitable for traditional communication processing operations, and flexibly configure the length of the third time domain resource to increase the maximum sensing distance.

In the signal receiving scheme provided in the embodiments of the present disclosure, the receiving end may receive, within the preset time window, the integrated sensing and communication signal transmitted by the transmitting end on the second time domain resource; and the receiving end obtains the sensing information or the communication information based on the integrated sensing and communication signal received. It can be seen that the receiving end may receive, within the preset time window, the integrated sensing and communication signal transmitted by the transmitting end on the second time domain resource to enable time-division of transmitting and receiving, thereby avoiding the isolation requirements between the receiving end and the transmitting end. Furthermore, the embodiments of the present disclosure may flexibly adjust the length of the preset time window to flexibly adjust the maximum sensing distance. The receiving end obtains the sensing information or the communication information based on the integrated sensing and communication signal received, so as to realize communication and sensing functions simultaneously, thereby reducing sensing resource overhead and improving spectrum efficiency.

The foregoing descriptions are merely specific implementations of the present disclosure, but the protection scope of the present disclosure is not limited thereto. Any changes or replacements within the technical scope of the present disclosure shall be included in the protection scope of the present disclosure. Therefore, the protection scope of the present disclosure shall be subject to the protection scope of the claims.

## Claims

1. A signal transmission method, **characterized by** being applied to a transmitting end, comprising:

   generating an integrated sensing and communication signal, wherein time domain resources of the integrated sensing and communication signal comprise a first time domain resource, a second time domain resource and a third time domain resource in sequence; and
   transmitting the integrated sensing and communication signal on the second time domain resource.

2. The method according to claim 1, wherein the time domain resources of the integrated sensing and communication signal occupy N orthogonal frequency division multiplexing (OFDM) symbols, N being a positive integer.

3. The method according to claim 1 or 2, wherein generating the integrated sensing and communication signal, comprises:
generating the integrated sensing and communication signal based on preset configuration parameters; wherein the preset configuration parameters comprise at least one of following:

a first parameter, the first parameter being configured to indicate a number of OFDM symbols occupied by the integrated sensing and communication signal; a value of the first parameter being a positive integer;
a second parameter, the second parameter being configured to determine a length of the second time domain resource of the integrated sensing and communication signal or subcarrier spacing of the integrated sensing and communication signal; a value of the second parameter being a positive integer; or
a third parameter, the third parameter being configured to indicate a length of the first time domain resource.

4. The method according to claim 3, wherein the subcarrier spacing of the integrated sensing and communication signal is $2^m$ times subcarrier spacing of an OFDM symbol, m being the value of the second parameter.

5. The method according to claim 3, wherein a valid duration of the integrated sensing and communication signal is $\frac{1}{2^m}$ times a duration of an OFDM symbol, m being the value of the second parameter.

6. The method according to claim 2, wherein the first time domain resource and the second time domain resource are both located within a first OFDM symbol in the N OFDM symbols.

7. The method according to claim 6, wherein a length of the first time domain resource is a length of a cyclic prefix of an OFDM symbol.

8. The method according to claim 2, wherein a number of the OFDM symbols occupied by the integrated sensing and communication signal is determined based on a preset sensing distance, the sensing distance being a distance between the transmitting end and a sensing target.

9. The method according to claim 8, wherein the number of the OFDM symbols occupied by the integrated sensing and communication signal and the sensing distance satisfy a monotonic increasing relationship.

10. A signal reception method, **characterized by** being applied to a receiving end, comprising:

receiving an integrated sensing and communication signal transmitted by a transmitting end on a second time domain resource, wherein time domain resources of the integrated sensing and communication signal comprise a first time domain resource, the second time domain resource and a third time domain resource in sequence; and
obtaining sensing information or communication information based on the integrated sensing and communication signal received.

11. The method according to claim 10, wherein the time domain resources of the integrated sensing and communication signal comprise N orthogonal frequency division multiplexing (OFDM) symbols, N being a positive integer.

12. The method according to claim 10 or 11, wherein receiving the integrated sensing and communication signal transmitted by the transmitting end on the second time domain resource, comprises:
receiving, within a preset time window, the integrated sensing and communication signal transmitted by the transmitting end on the second time domain resource, wherein the preset time window is determined based on preset configuration parameters, and the preset configuration parameters comprise at least one of following:

a first parameter, the first parameter being configured to indicate a number of OFDM symbols occupied by the integrated sensing and communication signal;
a second parameter, the second parameter being configured to determine a length of the second time domain resource of the integrated sensing and communication signal or subcarrier spacing of the integrated sensing and communication signal; or
a third parameter, the third parameter being configured to determine a length of the first time domain resource.

13. The method according to claim 12, wherein the subcarrier spacing of the integrated sensing and communication signal is $2^m$ times subcarrier spacing of an OFDM symbol, m being a value of the second parameter, and m being a positive integer.

14. The method according to claim 12, wherein a valid duration of the integrated sensing and communication signal is $\frac{1}{2^m}$ times a duration of an OFDM symbol, m being a value of the second parameter, and m being a positive integer.

15. The method according to claim 12, wherein the first time domain resource and the second time domain resource are both located within a first OFDM symbol in the N OFDM symbols.

16. The method according to claim 15, wherein a length of the first time domain resource is a length of a cyclic prefix of an OFDM symbol.

17. The method according to claim 15 or 16, wherein in a case where the receiving end is a communication receiving end, the preset time window comprises other time domain resources in the first OFDM symbol except for the first time domain resource; wherein a start time of the preset time window is a time at which the communication receiving end has received the integrated sensing and communication signal; or a start time of the preset time window is a time before the communication receiving end has received the integrated sensing and communication signal.

18. The method according to claim 12, wherein in a case where the receiving end is a sensing receiving end, the preset time window comprises the second time domain resource and the third time domain resource.

19. The method according to claim 12, wherein in a case where the receiving end is a sensing receiving end, the preset time window comprises the third time domain resource.

20. The method according to claim 11, wherein a number of the OFDM symbols occupied by the integrated sensing and communication signal is determined based on a preset sensing distance, the sensing distance being a distance between the transmitting end and a sensing target.

21. The method according to claim 20, wherein the number of the OFDM symbols occupied by the integrated sensing and communication signal and the sensing distance satisfy a monotonic increasing relationship.

22. A communication device, **characterized by** comprising a memory and a processor, wherein the memory is coupled to the processor; the memory is configured to store instructions executable by the processor; and the processor, when executing the instructions, performs the method according to any one of claims 1 to 21.

23. A computer-readable storage medium, wherein the computer-readable storage medium has computer instructions stored thereon, and the computer instructions, when running on an electronic device, enable the electronic device to perform the method according to any one of claims 1 to 21.

Transmitting end 110

Sensing target

Communication receiving end 120

Communication processing device

Sensing receiving end 130

Sensing processing device

FIG. 1

A sending end generates an integrated sensing and communication signal — S201

The sending end sends the integrated sensing and communication signal on a second time domain resource — S202

FIG. 2

Original OFDM waveform

$T_{cp}$   $T_{symbol}$

Integrated sensing and communication signal m=1, N=1

Integrated sensing and communication signal m=1, N=2

Time domain

Integrated sensing and communication signal

Preset time window during communication processing

FIG. 3

FIG. 4

FIG. 5

FIG. 6

FIG. 7

Terminal device

FIG. 8

A base station generates an integrated sensing and communication signal based on preset configuration parameters and transmits the integrated sensing and communication signal ⟋— Sc1

The base station transmits the preset configuration parameters to a terminal device, so that the terminal device may demodulate the integrated sensing and communication signal based on the preset configuration parameters ⟋— Sc2

The terminal device receives the integrated sensing and communication signal transmitted by the base station and performs communication processing on the integrated sensing and communication signal to obtain communication information ⟋— Sc3

The base station receives the integrated sensing and communication signal (also referred to as a sensing echo signal) reflected by a sensing target, and performs sensing processing on the signal to obtain sensing information ⟋— Sc4

FIG. 9

Integrated sensing and communication signal

Echo signal

Sensing target

Integrated sensing and communication signal

Base station A

Terminal device

Base station B

FIG. 10

A base station A generates an integrated sensing and communication signal based on preset configuration parameters and transmits the integrated sensing and communication signal ⟋— Sd1

The base station A transmits the preset configuration parameters to a terminal device and a base station B, so that the terminal device and the base station B may demodulate the integrated sensing and communication signal based on the preset configuration parameters ⟋— Sd2

The terminal device receives the integrated sensing and communication signal transmitted by the base station A and performs communication processing on the integrated sensing and communication signal to obtain communication information ⟋— Sd3

The base station B receives the integrated sensing and communication signal (also referred to as a sensing echo signal) reflected by a sensing target, and performs sensing processing on the signal to obtain sensing information ⟋— Sd4

FIG. 11

Sensing target

Integrated sensing and communication signal

Echo signal

Integrated sensing and communication signal

Terminal device

Base station

## FIG. 12

A base station transmits preset configuration parameters to a terminal device — Se1

The terminal device generates an integrated sensing and communication signal based on the preset configuration parameters and transmits the integrated sensing and communication signal — Se2

A communication receiving end of the base station receives the integrated sensing and communication signal transmitted by the terminal device and performs communication processing on the integrated sensing and communication signal to obtain communication information — Se3

A sensing receiving end of the base station receives the integrated sensing and communication signal (also referred to as an echo signal) reflected by a sensing target or background, and performs sensing processing on the signal to obtain sensing information — Se4

## FIG. 13

Original OFDM waveform

$T_{cp}$   $T_{symbol}$

Integrated sensing and communication signal m=1, N=1

Receiving signal window of a communication receiving end and a sensing receiving end

Time domain

## FIG. 14

Terminal device

Integrated sensing and
communication signal

Echo signal

Sensing target

Integrated sensing and
communication signal

Base station

FIG. 15

| | |
|---|---|
| A terminal device requests a base station to transmit an integrated sensing and communication signal and to obtain preset configuration parameters | Sf1 |

| | |
|---|---|
| In response to a request from the terminal device, the base station transmits the preset configuration parameters to the terminal device | Sf2 |

| | |
|---|---|
| The terminal device generates the integrated sensing and communication signal based on the preset configuration parameters, and transmits the integrated sensing and communication signal with a part of antenna(s) of the terminal device as a transmitting antenna | Sf3 |

| | |
|---|---|
| The base station, as a communication receiving end, receives the integrated sensing and communication signal transmitted by the terminal device and performs communication processing on the integrated sensing and communication signal to obtain communication information | Sf4 |

| | |
|---|---|
| The terminal device, with another part of the antenna(s) as a receiving antenna, receives the integrated sensing and communication signal (also referred to as an echo signal) reflected by a sensing target, and performs sensing processing on the signal to obtain sensing information | Sf5 |

FIG. 16

Signal transmission device 400

Generating module — 401

Transmitting module — 402

FIG. 17

Signal reception device 500

Receiving module — 501

Determining module — 502

FIG. 18

— 600

— 602    — 603

Processor    Communica-tion interface

— 604

Bus

Memory

— 601

FIG. 19

## INTERNATIONAL SEARCH REPORT

| International application No. |
| --- |
| **PCT/CN2024/107499** |

**A. CLASSIFICATION OF SUBJECT MATTER**

H04W72/0446(2023.01)i; H04W72/50(2023.01)i; H04W24/02(2009.01)i

According to International Patent Classification (IPC) or to both national classification and IPC

**B. FIELDS SEARCHED**

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNTXT; VEN; CNKI; ENTXTC; IEEE; 3GPP: 通信感知一体化, 感知通信一体化, 时域资源, 长度, 符号个数, 循环前缀, 保护间隔, 波形, 占空比, 空白, 填0, 不发送, 回波, 感知距离, 隔离, ISAC, integrated sensing and communication, CP, valid, time domain, symbol, safe guard, waveform, sensing distance, duty cycle, blank, zero, isolation

**C. DOCUMENTS CONSIDERED TO BE RELEVANT**

| Category* | Citation of document, with indication, where appropriate, of the relevant passages | Relevant to claim No. |
| --- | --- | --- |
| A | CN 115118402 A (HUAWEI TECHNOLOGIES CO., LTD.) 27 September 2022 (2022-09-27) description, paragraphs [0072]-[0100] | 1-23 |
| A | CN 115811454 A (ZTE CORP.) 17 March 2023 (2023-03-17) entire document | 1-23 |
| A | CN 116419144 A (VIVO COMMUNICATION TECHNOLOGY CO., LTD.) 11 July 2023 (2023-07-11) entire document | 1-23 |
| A | WU, Kai et al. "Removing False Targets for Cyclic Prefixed OFDM Sensing with Extended Ranging" *Sensors 2022*, 21 November 2022 (2022-11-21), entire document | 1-23 |

☐ Further documents are listed in the continuation of Box C.     ☑ See patent family annex.

| | |
| --- | --- |
| \* Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
| --- | --- |
| **24 October 2024** | **02 November 2024** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/107499**

| Patent document cited in search report | | | Publication date (day/month/year) | Patent family member(s) | Publication date (day/month/year) |
|---|---|---|---|---|---|
| CN | 115118402 | A | 27 September 2022 | None | |
| CN | 115811454 | A | 17 March 2023 | None | |
| CN | 116419144 | A | 11 July 2023 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 202310954069